# EUROPEAN PATENT SPECIFICATION

(11) **EP 4 530 246 B1**
(45) Date of publication and mention of the grant of the patent: **28.01.2026**
(21) Application number: 23815271.4
(22) Date of filing: 31.05.2023
(51) Int. Cl.: B67C 7/00, B29C 48/00, B29C 49/04, B67C 3/26, B29C 49/32, B29C 49/42, B29C 49/48

(54) **CONTINUOUS-PRODUCTION BLOW-FILL-SEAL APPARATUS, AND METHOD FOR USING SAME**
VORRICHTUNG ZUR KONTINUIERLICHEN HERSTELLUNG VON BLASFÜLLSIEGEL UND VERFAHREN ZUR VERWENDUNG DAVON
APPAREIL DE SOUFFLAGE-REMPLISSAGE-SCELLAGE À PRODUCTION CONTINUE, ET SON PROCÉDÉ D'UTILISATION

(30) Priority: 02.06.2022 CN 202210621254
(43) Date of publication of application: 02.04.2025
(73) Proprietor: Truking Technology Limited, Changsha, Hunan 410600 (CN)
(72) Inventor: MAI, Zhizai, Changsha, Hunan 410600 (CN); XU, Haiwen, Changsha, Hunan 410600 (CN); CHEN, Hengshan, Changsha, Hunan 410600 (CN)
(74) Representative: Lorenz Seidler Gossel Part. mbB
(86) International application number: PCT/CN2023/097600
(87) International publication number: WO 2023/232094

(56) References cited:
- EP-A2- 1 683 623
- CN-A- 104 723 536
- CN-A- 104 723 536
- CN-A- 104 986 360
- CN-A- 106 697 352
- CN-A- 110 936 583
- CN-A- 110 936 583
- CN-A- 111 483 153
- CN-A- 111 483 153
- CN-A- 113 683 044
- CN-A- 113 683 045
- CN-A- 114 835 078
- CN-U- 217 600 365
- FR-A5- 2 047 474
- JP-B1- 5 867 562
- US-A- 3 674 405

## Description

### Field of the Invention

The present disclosure relates to the technical field of foods, pharmaceutical packaging devices, and methods, and particularly to a continuous production blow-fill-seal device and a use method thereof.

### Background of the Invention

A conventional blow-fill-seal integrated machine is an intermittent device. A production process includes an extrusion station, a forming and filling station, a punching station, and the like. A forming mold is set at the extrusion station to receive and cut off an extrusion parison, and then the forming mold is transferred to the filling station to complete forming, filling, and sealing steps. Finally, it is transferred to the punching station to separate a product from waste, so that the production efficiency is low. Moreover, during the production process, the transfer of the parison is conducted in an open state, which exposes the filling liquid to the external environment and thereby increases the risk of contamination.

A blow-fill-seal device for a continuous production process of plastic bottles is known from CN 11 483 153 A. The device comprises an extruder, an extruder forming head connected to the extruder, a filling needle, a bottle head mold and a bottle body mold. Further machines are disclosed by CN 104 723 536 A, CN 110 936 583 A and FR 2 047 474 A5.

### Summary of the Invention

In order to overcome defects in the prior art, the present disclosure provides a blow-fill-seal device for continuous production, which is beneficial to improving the production efficiency and reducing the contamination risk.

The present disclosure further provides a use method of a blow-fill-seal device for continuous production.

In order to solve the above technical problems, the present disclosure provides the following technical solution:
a blow-fill-seal device for continuous production, comprising an extruder, an extruder forming head connected to the extruder, a filling needle disposed through the extruder forming head, a bottle head mold located below the extruder forming head, a bottle body mold located below the bottle head mold, and a lower clamping assembly located below the bottle head mold, wherein the lower clamping assembly is arranged on a first lifting mechanism, the bottle head mold and the bottle body mold are arranged on a second lifting mechanism, the lower clamping assembly comprises a pair of clamping plates, a bottle body positioning groove is formed on the inner side of each of the clamping plates, a bottle head positioning groove is formed below the bottle body positioning groove, and a cooling channel is arranged adjacent to the bottle body positioning groove and the bottle head positioning groove.

As a further improvement of the above technical solutions: wherein an upper clamping assembly is arranged above the bottle head mold, and the upper clamping assembly is arranged on the second lifting mechanism.

As a further improvement of the above technical solutions: further comprising a gas supply component for providing a clean gas to an area where the extruder forming head is located.

As a further improvement of the above technical solutions: wherein each of the clamping plates is connected to a first telescopic driving part and a first guide bar, and the first guide bar is disposed through a first guide support.

As a further improvement of the above technical solutions: wherein the upper clamping assembly comprises a pair of wedge-shaped clamping blocks, each of the wedge-shaped clamping blocks is connected to a second telescopic driving part through a second guide bar, and the second guide bar is disposed through a second guide support.

As a further improvement of the above technical solutions: wherein the filling needle comprises a filling needle body and a filling needle support for mounting the filling needle body, a cooling sleeve is arranged between the filling needle body and the filling needle support, and a through hole is formed in the side wall at the lower end of the cooling sleeve.

A use method of a blow-fill-seal device for continuous production, wherein an extruder extrudes a parison, a lower clamping assembly ascends to a position between two parts of the bottle body mold to bottom-seal the parison and acts downward, the parison is molded into a bottle body and a bottle head by the bottle body mold and a bottle head mold, and the lower clamping assembly, the bottle head mold, and the bottle body mold descend synchronously, and after the bottle body mold is opened and before the bottle head mold is opened, the lower clamping assembly ascends to the position between two parts of the bottle body mold to clamp and retain a bottle body.

As a further improvement of the technical solution, the use method includes the following specific steps:
S1, extrusion step: converting, by the extruder, a plastic raw material into a plastic fluid, and extruding, by the extruder forming head, the plastic fluid to the parison;
S2, bottom sealing of the parison step: driving, by the first lifting mechanism, the lower clamping assembly to ascend the position between two parts of the bottle body mold, clamping, by the lower clamping assembly, the parison, and driving, by the first lifting mechanism, the lower clamping assembly to descend synchronously with the parison to an initial position;
S3, bottle body forming step: closing the two parts of the bottle body mold and descending the bottle body mold synchronously with the parison to form the bottle body, descending the filling needle to a set position for filling, and performing resetting after filling is completed;
S4, bottle head forming step: closing the bottle head mold to form the bottle head, driving, by the first lifting mechanism, the lower clamping assembly, and driving, by the second lifting mechanism, the bottle head mold and the bottle body mold to descend synchronously with the parison to the set positions;
S5, parison clamping step: opening the bottle body mold, driving, by the first lifting mechanism, the lower clamping assembly, to ascend to the position between two parts of the bottle body mold, clamping, by the lower clamping assembly, the formed bottle body, and opening the bottle head mold;
S6, resetting step: driving, by the second lifting mechanism, the bottle head mold and the bottle body mold, to ascend to the initial position, and driving, by the first lifting mechanism, the lower clamping assembly to move to the initial position; and
S7, circularly performing steps S3 to S6, until production is completed or a malfunction leads to a shutdown.

Compared to the prior art, the present disclosure has the advantages that the blow-fill-seal device for continuous production disclosed by the present disclosure can perform extruding, forming, filling, and sealing steps continuously, which is beneficial to improving the production efficiency, and in the whole production process, the parison is maintained in a closed state, so that the risk of contamination of the filling liquid medicinal by external environment factors is avoided; the lower clamping assembly, driven by the first lifting mechanism, can ascend to the position between two parts of the bottle body mold and clamp and fix the bottle body of the upper bottle and the bottle head of the lower bottle to effectively prevent the parison and the bottle from swinging when the bottle head mold and the bottle body mold are opened and closed. Furthermore, the cooling agent introduced into the cooling channel in the clamping plate can cool the formed bottle, which is beneficial for ensuring the consistency of the bottle's quality.

The use method of the continuous production blow-fill-seal device disclosed by the present disclosure can perform extrusion, forming, filling, and sealing steps continuously, which improves the production efficiency, and throughout the entire production process, the parison form in a closed state, so that the risk of contamination of the filling liquid medicinal by external environment factors is avoided; the lower clamping assembly ascends to the position between two parts of the bottle mold to clamp and retain the bottle to effectively prevent the parison from swinging when the bottle head mold and the bottle body mold are opened and closed.

### Brief Description of the Drawings

FIG. 1 is a three-dimensional schematic structural diagram of a blow-fill-seal device for continuous production provided by the present disclosure.
FIG. 2 is a partially enlarged drawing of FIG. 1.
FIG. 3 is a three-dimensional schematic structural diagram of an upper clamping assembly and a lower clamping assembly in the present disclosure.
FIG. 4 is a schematic structural diagram of a filling needle in the present disclosure.
FIG. 5 is a three-dimensional amplified structural schematic diagram of a first lifting mechanism and a second lifting mechanism in the present disclosure.
FIG. 6 is a schematic structural diagram of an extruder forming head in the present disclosure.
FIG. 7 is a top-view schematic structural diagram of a parison extruded by an extruder forming head in the present disclosure.
FIG. 8 is a schematic diagram of a process of a use method of a blow-fill-seal device for continuous production provided by the present disclosure.

Reference numerals in the figures: 1, extruder; 2, extruder forming head; 3, filling needle; 31, filling needle body; 32, filling needle support; 33, cooling sleeve; 34, through hole; 4, bottle head mold; 5, bottle body mold; 6, lower clamping assembly; 61, clamping plate; 62, bottle body positioning groove; 63, bottle head positioning groove; 64, cooling channel; 65, first telescopic driving part; 66, first guide bar; 67, first guide support; 7, upper clamping assembly; 71, wedge-shaped clamping block; 72, second guide bar; 73, second telescopic driving part; 74, second guide support; 8, first lifting mechanism; 81, servo motor; 82, ball screw; 83, lead screw nut; 9, second lifting mechanism; 10, parison; 20, bottle.

### Detailed embodiments of the Invention

The present disclosure will be further described in detail below in combination with drawings and specific embodiments.

### Embodiment I

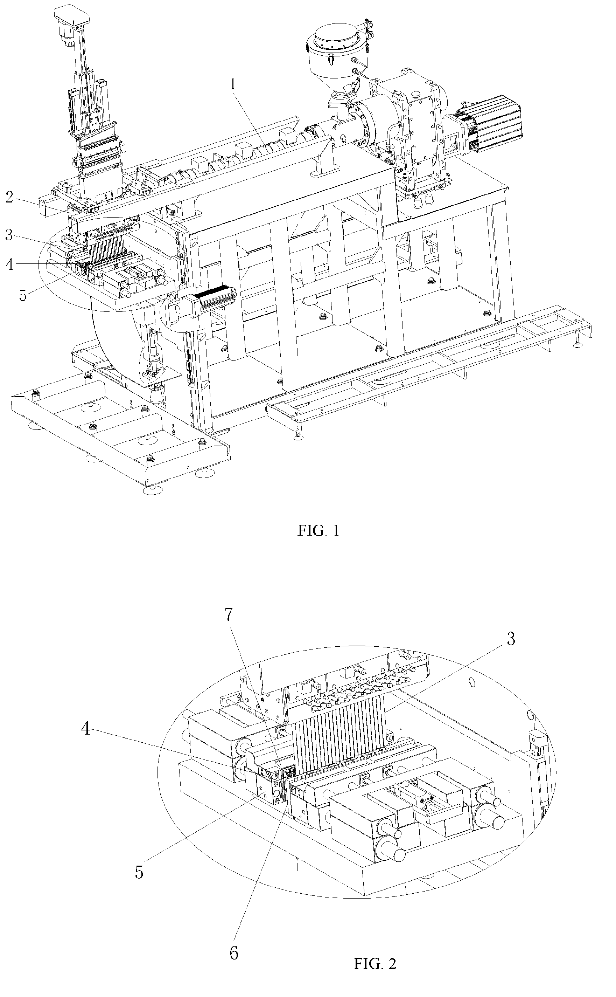

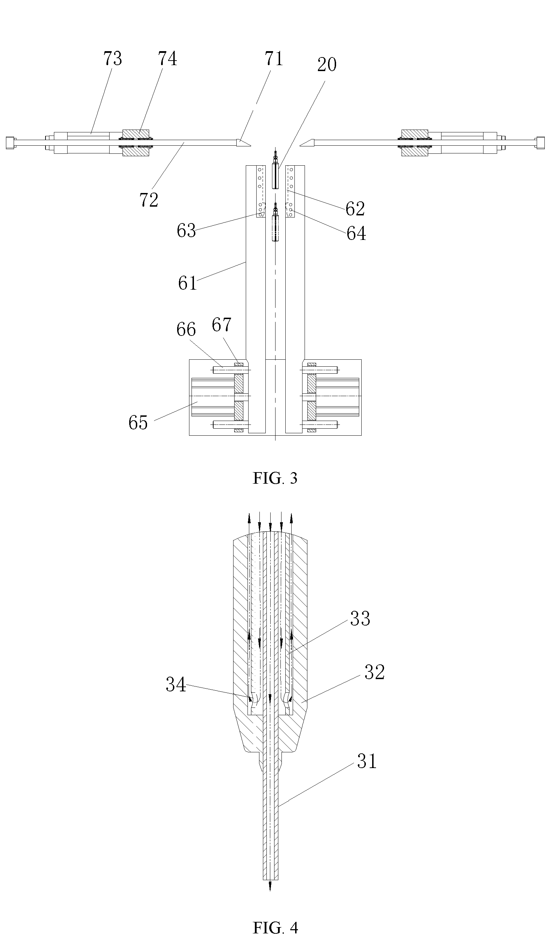

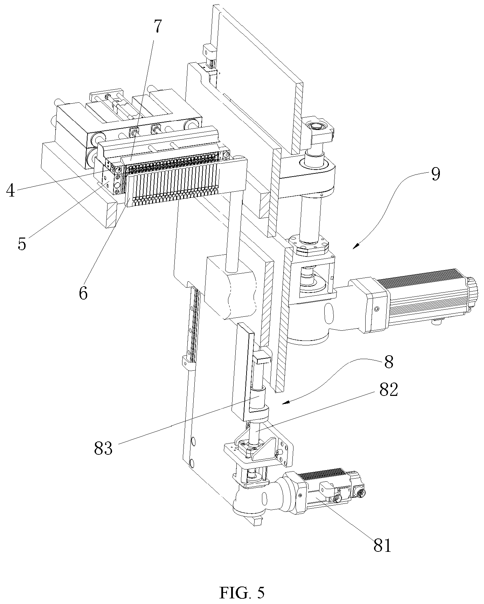

FIGs. 1-7 show an embodiment of a blow-fill-seal device for continuous production provided by the present disclosure. The blow-fill-seal device for continuous production in the embodiment, comprising an extruder 1, an extruder forming head 2 connected to the extruder 1, a filling needle 3 is disposed through the extruder forming head 2, a bottle head mold 4 located below the extruder forming head 2, a bottle body mold 5 located below the bottle head mold 4, and a lower clamping assembly 6 located below the bottle head mold 4, the lower clamping assembly 6 is arranged on a first lifting mechanism 8, the bottle head mold 4 and the bottle body mold 5 are arranged on a second lifting mechanism 9, the lower clamping assembly 6 comprises a pair of clamping plates 61, a bottle body positioning groove 62 is formed on the inner side of each of the clamping plates 61, a bottle head positioning groove 63 is formed below the bottle body positioning groove 62, and a cooling channel 64 is arranged adjacent to the bottle body positioning groove 62 and the bottle head positioning groove 63.

As an example, in the embodiment, the first lifting mechanism 8 includes a servo motor 81, a ball screw 82 connected to the servo motor 81, and a lead screw nut 83 arranged on the ball screw 82. A lower clamping assembly 6 is connected to the lead screw nut 83. When the device is in use, the servo motor 81 drives the ball screw 82 to rotate, the lead screw nut 83 ascends and descends on the ball screw 82, and the lower clamping assembly 6 ascends and descends synchronously with the lead screw nut 83. The whole structure is simple and reliable, and high in moving precision. Of course, in other embodiments, the first lifting mechanism 8 can also be in other forms. A second lifting mechanism 9 can be the same as the first lifting mechanism 8 in structure, which is not described repeatedly.

The blow-fill-seal device for continuous production can complete extruding, forming, filling, and sealing steps continuously, which is beneficial to improving the production efficiency, and in the whole production process, the parison 10 remains in a closed state, so that the risk that the external environment pollutes the filling liquid medicinal is avoided; the lower clamping assembly 6, driven by the first lifting mechanism 8, can ascend to the position between two parts of the bottle body mold 5 (after the bottle body mold 5 is opened) and clamp and fix the bottle body of the upper bottle 20 and the bottle head of the lower bottle 20, to prevent the parison 10 from swinging effectively when the bottle head mold 4 and the bottle body mold 5 are opened and closed. Furthermore, the cooling agent introduced into the cooling channel 64 in the clamping plate 61 can cool the bottle 20 after being formed, which is beneficial to ensuring the consistency of the bottle 20.

Further, in the embodiment, an upper clamping assembly 7 is arranged above the bottle head mold 4, and the upper clamping assembly 7 is arranged on the second lifting mechanism 9. The upper clamping assembly 7 collaborates with the lower clamping assembly 6, which can guarantee that at least one part of the parison 10 is clamped and fixed all the time. In the whole production process, the potential risk of the parison 10 swinging, when the bottle head mold 4 and the bottle body mold 5 are opened or closed, can be effectively avoided, so that the reliability of the device is further improved.

As a preferred embodiment, the blow-fill-seal device for continuous production also includes a gas supply component for providing a clean gas to an area where the extruder forming head 2 is located (not shown in the figures, such as a fan and a gas supply pipeline). The gas supply component provides a clean oxygen-free gas (such as nitrogen or an inert gas) to the area where the extruder forming head 2 is located, which guarantees a sterile and oxygen-free clean environment during the forming, filling, and sealing processes.

Further, in the embodiment, each of the clamping plates 61 is connected to a first telescopic driving part 65 (such as an air cylinder, an electric cylinder, and a lead screw nut pair) and a first guide bar 66, and the first guide bar 66 is disposed through a first guide support 67. The first guide bar 66 matches with the first guide support 67 to provide a guiding effect for the opening and closing actions of the clamping plates 61, which is beneficial to guaranteeing a smooth moving process and precision.

Further, in the embodiment, the upper clamping assembly 7 includes a pair of wedge-shaped clamping blocks 71, which are connected to a second telescopic driving part 73 (such as an air cylinder, an electric cylinder, or a lead screw nut pair) through a second guide bar 72, and the second guide bar 72 is disposed through a second guide support 74. By using the wedge-shaped clamping blocks 71, which are high in mechanical strength, the thin end of the wedge-shaped clamping blocks 71 is convenient to clamp and retain the parison 10 to reduce the material waste, and the thick end of the wedge-shaped clamping blocks 71 is conveniently connected to the second guide bar 72. The second guide bar 72 matches with the second guide support 74, provides a guiding effect for the opening and closing actions of the wedge-shaped clamping blocks 71, which is beneficial to guaranteeing a smooth and precision movement process.

Further, in the embodiment, the filling needle 3 includes a filling needle body 31, and a filling needle support 32 for mounting the filling needle body 31, a cooling sleeve 33 is arranged between the filling needle body 31 and the filling needle support 32, and a through hole 34 is formed in the side wall at the lower end of the cooling sleeve 33. A cooling agent can be introduced into the cooling sleeve 33, and the cooling agent flows downward, then exiting through the through hole 34 and finally and leaving the filling needle support 32 from the gap between the cooling sleeve 33 and the filling needle support 32. In the flowing process, the liquid medicinal in the filling needle body 31 can be insulated, which avoids the adverse effect on the liquid medicinal due to high-temperature of the parison 10.

### Embodiment II

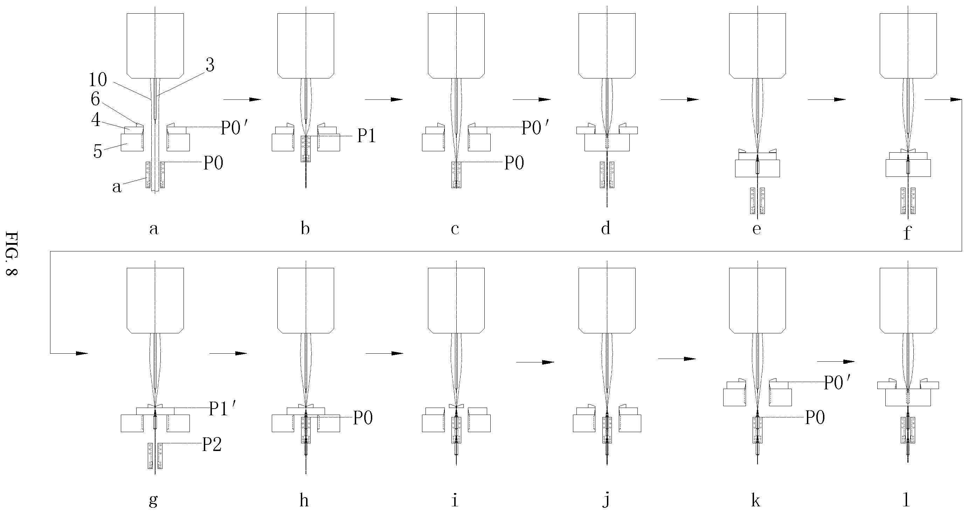

FIG. 8 shows an embodiment of a use method of a blow-fill-seal device for continuous production provided by the present disclosure. A use method of a blow-fill-seal device for continuous production in the embodiment, an extruder 1 extrudes a parison 10, a lower clamping assembly 6 ascends to a position between two parts of the bottle body mold 5 to bottom-seal the parison 10 and acts downward, the parison 10 is molded into a bottle body and a bottle head by the bottle body mold 5 and a bottle head mold 4, and the lower clamping assembly 6, the bottle head mold 4, and the bottle body mold 5 descend synchronously, and after the bottle body mold 5 is opened and before the bottle head mold 4 is opened, the lower clamping assembly 6 ascends to the position between two parts of the bottle body mold 5 to clamp and retain a bottle body 20.

The use method of the blow-fill-seal device for continuous production disclosed by the present disclosure can perform extruding, forming, filling, and sealing steps continuously, which improves the production efficiency, and in the whole production process, the parison 10 remains in a closed state, so that the risk that the external environment pollutes the filling liquid medicinal is avoided; the lower clamping assembly 6 ascends to the position between two parts of the bottle body mold 5 to clamp and retain the bottle 20, to prevent the parison 10 from swinging effectively when the bottle head mold 4 and the bottle body mold 5 are opened and closed.

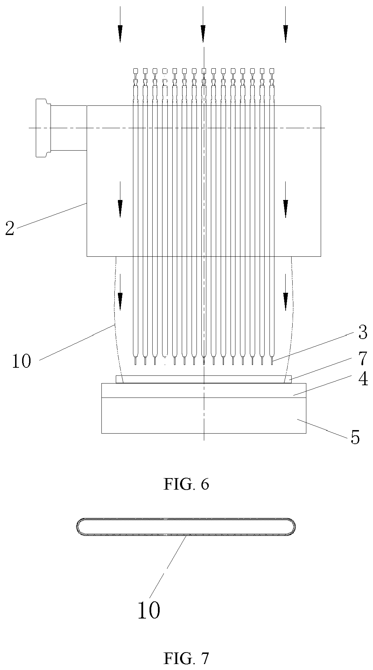

In the embodiment, the use method of a continuous production blow-fill-seal device includes the following specific steps:
S1, extrusion: the extruder 1 converts a plastic raw material into a plastic fluid, and the extruder forming head 2 extrudes the plastic fluid into the parison 10, specifically shown in FIG. 7, where the cross section of the parison 10 in the embodiment is of a waist circular closed structure;
S2, bottom sealing of the parison 10: the first lifting mechanism 8 drives the lower clamping assembly 6 to ascend the position between two parts of the bottle body mold 5 (at this time, the bottle body mold 5 has not yet been closed), the lower clamping assembly 6 clamps the parison 10, and the first lifting mechanism 8 drives the lower clamping assembly 6 to descend synchronously with the parison 10 to an initial position (P0 in FIG. 8a is the initial position of the lower clamping assembly 6, P0' is the initial position of the bottle head mold 4, which is also the highest position of the bottle head mold 4, and P1 in FIG. 8b is the position of the lower clamping assembly 6 ascending in the bottle body mold 5, which is also the highest position of the lower clamping assembly 6), as specifically shown in FIG. 8A to FIG. 8c;
S3, bottle body forming: the bottle body mold 5 is closed and descends synchronously with the parison 10 to form the bottle body, the filling needle 3 descends to a set position for filling, specifically shown in FIG. 8d, and resetting is performed after filling is completed;
S4, bottle head forming, the bottle head mold 4 is closed to form a bottle head, the first lifting mechanism 8 drives the lower clamping assembly 6, and the second lifting mechanism 9 drives the bottle head mold 4 and the bottle body mold 5 to descend synchronously with the parison 10 to set positions, specifically shown in FIG. 8e to FIG. 8g. The bottle head mold 4 in FIG. 8g is located at the P1' position, the lower clamping assembly 6 is located at the P2 position, and both the positions are the lowest positions;
S5, parison 10 clamping: the bottle body mold 5 is opened, the first lifting mechanism 8 drives the lower clamping assembly 6 to the position between two parts of the bottle body mold 5, the lower clamping assembly 6 clamps the bottle 20 after being formed, and the bottle head mold 4 is opened, specifically shown in FIG. 8g to FIG. 8j; it should be noted that for the first row of bottles 20 after being formed, the lower clamping assembly 6 only clamps the first row of bottles 20. In subsequent processes, the lower clamping assembly 6 clamps the bottles of the row of bottles 20 above and the bottle heads of the row of bottles 20 below synchronously, or in other words, the lower clamping assembly 6 clamps the bottle heads of the previous cycle of bottles 20 and the bottles of this cycle of bottles 20 synchronously;
S6, resetting: the second lifting mechanism 9 drives the bottle head mold 4 and the bottle body mold 5 to ascend to the initial positions, and the first lifting mechanism 8 drives the lower clamping assembly 6 to move to the initial position, specifically shown in FIG. 8k to FIG.8l, and the devices in FIG. 8l and FIG. 8d are in the same state; and
S7, steps S3 to S6 are repeatedly performed until production is completed or a failure occurs, leading to a shutdown.

Further, in the embodiment, the maximum distance between the lower clamping assembly and the bottle body mold 5 when the lower clamping assembly 6 is located below the bottle body mold 5 is greater than the length of the bottle head, specifically shown in FIG. 8c and FIG. 8k, so that an enough space can be reserved for clamping the bottle bodies of the row of bottles 20 above and the bottle heads of the row of bottles 20 below by the lower clamping assembly 6. In step S3, the lower clamping assembly 6 is opened while the bottle body mold 5 forms the bottles, preparing for the next clamping. Of course, in other embodiments, the lower clamping assembly 6 can be opened in the descending process in step S4; in step S5, the lower clamping assembly 6 ascends to the initial position; and in step S6, the movement distance of the lower clamping assembly 6 is zero, which is beneficial to simplifying the movement process of the lower clamping assembly 6, thereby improving the production efficiency.

Further, in the embodiment, during step S4, after the bottle head mold 4 is closed and bottle heads are formed, the upper clamping assembly 7 clamps the parison 10, specifically shown in FIG. 8f. Then, the second lifting mechanism 9 drives the bottle head mold 4, the bottle body mold 5 and the upper clamping assembly 7 to descend to set positions synchronously with the parison 10;
In step S5, after the bottle head mold 4 is opened, the upper clamping mechanism 7 is opened subsequently, specifically shown in FIG. 8i and FIG. 8j;
In step S6, the second lifting mechanism 9 drives the bottle head mold 4, the bottle body mold 5, and the upper clamping assembly 7 to ascend to the initial positions, specifically shown in FIG. 8k.

The upper clamping assembly 7 matches with the lower clamping assembly 6, which can guarantee that at least one part of the parison 10 is clamped and fixed all the time. In the whole production process, the potential issues caused by the parison 10 swings during the process of opening the bottle head mold 4 and the bottle body mold 5 can be effectively prevented, and the uniformity of the products is further guaranteed.

## Claims

1. A blow-fill-seal device for continuous production, comprising an extruder (1), an extruder forming head (2) connected to the extruder (1), a filling needle (3) disposed through the extruder forming head (2), a bottle head mold (4) located below the extruder forming head (2), a bottle body mold (5) located below the bottle head mold (4), and a lower clamping assembly (6) located below the bottle head mold (4), the lower clamping assembly (6) comprises a pair of clamping plates, the device being
**characterized in that** the lower clamping assembly (6) is arranged on a first lifting mechanism (8), the bottle head mold (4) and the bottle body mold (5) are arranged on a second lifting mechanism (9), a bottle body positioning groove (62) is formed on the inner side of each of the clamping plates (61), a bottle head positioning groove (63) is formed below the bottle body positioning groove (62), and a cooling channel (64) is arranged adjacent to the bottle body positioning groove (62) and the bottle head positioning groove (63).

2. The blow-fill-seal device for continuous production according to claim 1, **characterized in that** an upper clamping assembly (7) is arranged above the bottle head mold (4), and the upper clamping assembly (7) is arranged on the second lifting mechanism (9).

3. The blow-fill-seal device for continuous production according to claim 1, **characterized in that** the device further comprising a gas supply component for providing a clean gas to an area where the extruder forming head (2) is located.

4. The blow-fill-seal device for continuous production according to claim 1, **characterized in that** each of the clamping plates (61) is connected to a first telescopic driving part (65) and a first guide bar (66), and the first guide bar (66) is disposed through a first guide support (67).

5. The blow-fill-seal device for continuous production according to claim 2, **characterized in that** the upper clamping assembly (7) comprises a pair of wedge-shaped clamping blocks (71), each of the wedge-shaped clamping blocks (71) is connected to a second telescopic driving part (73) through a second guide bar (72), and the second guide bar (72) is disposed through a second guide support (74).

6. The blow-fill-seal device for continuous production according to any one of claims 1 to 5, **characterized in that** the filling needle (3) comprises a filling needle body (31) ,and a filling needle support (32) for mounting the filling needle body (31), a cooling sleeve (33) is arranged between the filling needle body (31) and the filling needle support (32), and a through hole (34) is formed in the side wall at the lower end of the cooling sleeve (33).

7. A use method of a blow-fill-seal device for continuous production, wherein an extruder (1) extrudes a parison (10), a lower clamping assembly (6) ascends to a position between two parts of the bottle body mold (5) to bottom-seal the parison (10) and acts downward, the parison (10) is molded into a bottle body and a bottle head by the bottle body mold (5) and a bottle head mold (4), and the lower clamping assembly (6), the bottle head mold (4), and the bottle body mold (5) descend synchronously, and after the bottle body mold (5) is opened and before the bottle head mold (4) is opened, the lower clamping assembly (6) ascends to the position between two parts of the bottle body mold (5) to clamp and retain a bottle body (20).

8. The use method of a blow-fill-seal device for continuous production according to claim 7, **characterized in that** comprising the following steps:
S1, extrusion: converting, by the extruder (1), a plastic raw material into a plastic fluid, and extruding, by the extruder forming head (2), the plastic fluid into the parison (10);
S2, bottom sealing of the parison (10): driving, by the first lifting mechanism (8), the lower clamping assembly (6) to ascend the position between two parts of the bottle body mold (5), clamping, by the lower clamping assembly (6), the parison (10), and driving, by the first lifting mechanism (8), the lower clamping assembly (6) to descend synchronously with the parison (10) to an initial position;
S3, bottle body forming: closing the two parts of the bottle body mold (5) and descending the bottle body mold synchronously with the parison (10) to form the bottle body, descending the filling needle (3) to a set position for filling, and performing resetting after filling is completed;
S4, bottle head forming: closing the bottle head mold (4) to form the bottle head, driving, by the first lifting mechanism (8), the lower clamping assembly (6), and driving, by the second lifting mechanism (9), the bottle head mold (4) and the bottle body mold (5) to descend synchronously with the parison (10) to the set positions;
S5, parison (10) clamping: opening the bottle body mold (5), driving, by the first lifting mechanism (8), the lower clamping assembly (6), to ascend to the position between two parts of the bottle body mold (5), clamping, by the lower clamping assembly (6), the formed bottle body (20), and opening the bottle head mold (4);
S6, resetting: driving, by the second lifting mechanism (9), the bottle head mold (4) and the bottle body mold (5), to ascend to the initial position, and driving, by the first lifting mechanism (8), the lower clamping assembly (6) to move to the initial position; and
S7, circularly performing steps S3 to S6 until production is completed or a malfunction leads to a shutdown.

9. The use method of a blow-fill-seal device for continuous production according to claim 8, **characterized in that** the maximum distance between the lower clamping assembly (6) and the bottle body mold (5) when the lower clamping assembly (6) is located below the bottle body mold (5) is greater than the length of the bottle head; in step S3, the lower clamping assembly (6) is opened while the bottle body mold (5) forms the bottle body; in step S5, the lower clamping assembly (6) ascends to the initial position; and in step S6, a movement distance of the lower clamping assembly (6) is zero.

10. The use method of a blow-fill-seal device for continuous production according to claim 8, **characterized in that**
in step S4, after the bottle head mold (4) is closed to form the bottle head, the upper clamping mechanism (7) clamps the parison (10), and then the second lifting mechanism (9) drives the bottle head mold (4), the bottle body mold (5), and the upper clamping mechanism (7) to descend synchronously with the parison (10) to the set positions;
in step S5, after the bottle head mold (4) is opened, the upper clamping mechanism (7) is opened; and
in step S6, the second lifting mechanism (9) drives the bottle head mold (4), the bottle body mold (5), and the upper clamping mechanism (7) to ascend to the initial positions.

## Patentansprüche

1. Blow-Fill-Seal-Vorrichtung für eine kontinuierliche Herstellung, umfassend einen Extruder (1), einen Extruderformierkopf (2), der mit dem Extruder (1) verbunden ist, eine Füllnadel (3), die über den Extruderformierkopf (2) angebracht ist, eine Flaschenkopfform (4), die sich unterhalb des Extruderformierkopfes (2) befindet, eine Flaschenkörperform (5), die sich unterhalb der Flaschenkopfform (4) befindet, und eine untere Klemmanordnung (6), die sich unterhalb der Flaschenkopfform (4) befindet, wobei die untere Klemmanordnung (6) ein Paar von Klemmplatten umfasst, wobei die Vorrichtung **dadurch gekennzeichnet ist, dass** die untere Klemmanordnung (6) auf einem ersten Hebemechanismus (8) angeordnet ist, die Flaschenkopfform (4) und die Flaschenkörperform (5) auf einem zweiten Hebemechanismus (9) angeordnet sind, eine Flaschenkörper-Positionierungsnut (62) an der Innenseite jeder der Klemmplatten (61) ausgebildet ist, eine Flaschenkopf-Positionierungsnut (63) unter der Flaschenkörper-Positionierungsnut (62) ausgebildet ist und ein Kühlkanal (64) benachbart zu der Flaschenkörper-Positionierungsnut (62) und der Flaschenkopf-Positionierungsnut (63) angeordnet ist.

2. Blow-Fill-Seal-Vorrichtung für eine kontinuierliche Herstellung nach Anspruch 1, **dadurch gekennzeichnet, dass** eine obere Klemmanordnung (7) oberhalb der Flaschenkopfform (4) angeordnet ist und die obere Klemmanordnung (7) an dem zweiten Hebemechanismus (9) angeordnet ist.

3. Blow-Fill-Seal-Vorrichtung für eine kontinuierliche Herstellung nach Anspruch 1, **dadurch gekennzeichnet, dass** die Vorrichtung ferner eine Gaszufuhrkomponente zum Bereitstellen eines Reingases an einen Bereich umfasst, in dem sich der Extruderformierkopf (2) befindet.

4. Blow-Fill-Seal-Vorrichtung für eine kontinuierliche Herstellung nach Anspruch 1, **dadurch gekennzeichnet, dass** jede der Klemmplatten (61) mit einem ersten teleskopischen Antriebsteil (65) und einer ersten Führungsstange (66) verbunden ist und die erste Führungsstange (66) über einen ersten Führungsträger (67) angebracht ist.

5. Blow-Fill-Seal-Vorrichtung für eine kontinuierliche Herstellung nach Anspruch 2, **dadurch gekennzeichnet, dass** die obere Klemmanordnung (7) ein Paar von keilförmigen Klemmblöcken (71) umfasst, wobei jeder der keilförmigen Klemmblöcke (71) über eine zweite Führungsstange (72) mit einem zweiten teleskopischen Antriebsteil (73) verbunden ist und die zweite Führungsstange (72) über einen zweiten Führungsträger (74) angebracht ist.

6. Blow-Fill-Seal-Vorrichtung für eine kontinuierliche Herstellung nach einem der Ansprüche 1 bis 5, **dadurch gekennzeichnet, dass** die Füllnadel (3) einen Füllnadelkörper (31) und einen Füllnadelträger (32) zum Montieren des Füllnadelkörpers (31) umfasst, zwischen dem Füllnadelkörper (31) und dem Füllnadelträger (32) eine Kühlhülse (33) angeordnet ist und ein Durchgangsloch (34) in der Seitenwand an dem unteren Ende der Kühlhülse (33) ausgebildet ist.

7. Verwendungsverfahren einer Blow-Fill-Seal-Vorrichtung für eine kontinuierliche Herstellung, wobei ein Extruder (1) einen Vorformling (10) extrudiert, eine untere Klemmanordnung (6) zu einer Position zwischen zwei Teilen der Flaschenkörperform (5) aufsteigt, um den Vorformling (10) bodenzuversiegeln, und nach unten wirkt, der Vorformling (10) durch die Flaschenkörperform (5) und eine Flaschenkopfform (4) zu einem Flaschenkörper und einem Flaschenkopf geformt wird, und die untere Klemmanordnung (6), die Flaschenkopfform (4) und die Flaschenkörperform (5) sich synchron absenken, und nachdem die Flaschenkörperform (5) geöffnet ist und bevor die Flaschenkopfform (4) geöffnet ist, die untere Klemmanordnung (6) zu der Position zwischen zwei Teilen der Flaschenkörperform (5) aufsteigt, um einen Flaschenkörper (20) zu klemmen und zu halten.

8. Verwendungsverfahren einer Blow-Fill-Seal-Vorrichtung für eine kontinuierliche Herstellung nach Anspruch 7, **dadurch gekennzeichnet, dass** es die folgenden Schritte umfasst:
S1, Extrusion: Umwandeln, durch den Extruder (1), eines Kunststoffrohstoffs in eine Kunststoffflüssigkeit und Extrudieren, durch den Extruderformierkopf (2), der Kunststoffflüssigkeit in den Vorformling (10);
S2, Bodenversiegeln des Vorformlings (10): Antreiben, durch den ersten Hebemechanismus (8), der unteren Klemmanordnung (6), um die Position zwischen zwei Teilen der Flaschenkörperform (5) aufzusteigen, Klemmen, durch die untere Klemmanordnung (6), des Vorformlings (10) und Antreiben, durch den ersten Hebemechanismus (8), der unteren Klemmanordnung (6), um mit dem Vorformling (10) in eine Ausgangsposition synchron abzusenken;
S3, Ausbilden des Flaschenkörpers: Schließen der zwei Teile der Flaschenkörperform (5) und synchrones Absenken der Flaschenkörperform mit dem Vorformling (10), um den Flaschenkörper auszubilden, Absenken der Füllnadel (3) in eine eingestellte Position zum Füllen und Durchführen des Rückssetzens nach Abschluss des Füllens;
S4, Ausbilden des Flaschenkopfs: Schließen der Flaschenkopfform (4), um den Flaschenkopf auszubilden, Antreiben, durch den ersten Hebemechanismus (8), der unteren Klemmanordnung (6) und Antreiben, durch den zweiten Hebemechanismus (9), der Flaschenkopfform (4) und der Flaschenkörperform (5), um sich mit dem Vorformling (10) in die eingestellten Positionen synchron abzusenken;
S5, Klemmen des Vorformlings (10): Öffnen der Flaschenkörperform (5), Antreiben, durch den ersten Hebemechanismus (8), der unteren Klemmanordnung (6), um in die Position zwischen zwei Teilen der Flaschenkörperform (5) aufzusteigen, Klemmen, durch die untere Klemmanordnung (6), des ausgebildeten Flaschenkörpers (20) und Öffnen der Flaschenkopfform (4);
S6, Rücksetzen: Antreiben, durch den zweiten Hebemechanismus (9), der Flaschenkopfform (4) und der Flaschenkörperform (5), um in die Ausgangsposition aufzusteigen, und Antreiben, durch den ersten Hebemechanismus (8), der unteren Klemmanordnung (6), um sich in die Ausgangsposition zu bewegen; und
S7, zirkuläres Durchführen der Schritte S3 bis S6, bis die Herstellung abgeschlossen ist oder eine Störung zur Abschaltung führt.

9. Verwendungsverfahren einer Blow-Fill-Seal-Vorrichtung für eine kontinuierliche Herstellung nach Anspruch 8, **dadurch gekennzeichnet, dass** der maximale Abstand zwischen der unteren Klemmanordnung (6) und der Flaschenkörperform (5), wenn sich die untere Klemmanordnung (6) unterhalb der Flaschenkörperform (5) befindet, größer als die Länge des Flaschenkopfes ist; in Schritt S3 die untere Klemmanordnung (6) geöffnet wird, während die Flaschenkörperform (5) den Flaschenkörper ausbildet; in Schritt S5 die untere Klemmanordnung (6) in die Ausgangsposition aufsteigt; und in Schritt S6 der Bewegungsabstand der unteren Klemmanordnung (6) null beträgt.

10. Verwendungsverfahren einer Blow-Fill-Seal-Vorrichtung für eine kontinuierliche Herstellung nach Anspruch 8, **dadurch gekennzeichnet, dass**
in Schritt S4, nachdem die Flaschenkopfform (4) geschlossen ist, um den Flaschenkopf auszubilden, der obere Klemmmechanismus (7) den Vorformling (10) klemmt und dann der zweite Hebemechanismus (9) die Flaschenkopfform (4), die Flaschenkörperform (5) und den oberen Klemmmechanismus (7) antreibt, um sich mit dem Vorformling (10) zu den eingestellten Positionen synchron abzusenken;
in Schritt S5, nachdem der Flaschenkopfform (4) geöffnet wird, der obere Klemmmechanismus (7) geöffnet wird; und
in Schritt S6 der zweite Hebemechanismus (9) die Flaschenkopfform (4), die Flaschenkörperform (5) und den oberen Klemmmechanismus (7) antreibt, um in die Ausgangspositionen aufzusteigen.

## Revendications

1. Dispositif de soufflage-remplissage-scellage destiné à une production continue, le dispositif comprenant une extrudeuse (1), une tête de formation (2) reliée à l'extrudeuse (1), une aiguille de remplissage (3) disposée à travers la tête de formation (2) de l'extrudeuse, un moule (4) de tête de bouteille situé au-dessous de la tête de formation (2) de l'extrudeuse, un moule (5) de corps de bouteille situé au-dessous du moule (4) de tête de bouteille, et un ensemble de serrage inférieur (6) situé au-dessous du moule (4) de tête de bouteille, l'ensemble de serrage inférieur (6) comprenant une paire de plaques de serrage, le dispositif étant **caractérisé en ce que** l'ensemble de serrage inférieur (6) est agencé sur un premier mécanisme élévateur (8), le moule (4) de tête de bouteille et le moule (5) de corps de bouteille sont agencés sur un second mécanisme élévateur (9), une rainure (62) de positionnement de corps de bouteille est formée sur le côté interne de chacune des plaques de serrage (61), une rainure (63) de positionnement de tête de bouteille est formée au-dessous de la rainure (62) de positionnement de corps de bouteille, et un canal de refroidissement (64) est agencé adjacent à la rainure (62) de positionnement de corps de bouteille et à la rainure (63) de positionnement de tête de bouteille.

2. Le dispositif de soufflage-remplissage-scellage destiné à une production continue selon la revendication 1, **caractérisé en ce qu'**un ensemble de serrage supérieur (7) est agencé au-dessus du moule (4) de tête de bouteille, et l'ensemble de serrage supérieur (7) est agencé sur le second mécanisme élévateur (9).

3. Le dispositif de soufflage-remplissage-scellage destiné à une production continue selon la revendication 1, **caractérisé en ce que** le dispositif comprend en outre un élément d'alimentation en gaz servant à alimenter en gaz propre une zone dans laquelle le tête de formation (2) de l'extrudeuse est située.

4. Le dispositif de soufflage-remplissage-scellage destiné à une production continue selon la revendication 1, **caractérisé en ce que** chacune des plaques de serrage (61) est reliée à une première partie d'entraînement télescopique (65) et à une première barre de guidage (66), et la première barre de guidage (66) est disposée à travers un premier support de guidage (67).

5. Le dispositif de soufflage-remplissage-scellage destiné à une production continue selon la revendication 2, **caractérisé en ce que** l'ensemble de serrage supérieur (7) comprend une paire de blocs de serrage en forme de coin (71), chacun des blocs de serrage en forme de coin (71) est relié à une seconde partie d'entraînement télescopique (73) par l'intermédiaire d'une seconde barre de guidage (72), et la seconde barre de guidage (72) est disposée à travers un second support de guidage (74).

6. Le dispositif de soufflage-remplissage-scellage destiné à une production continue selon l'une quelconque des revendications 1 à 5, **caractérisé en ce que** l'aiguille de remplissage (3) comprend un corps (31) d'aiguille de remplissage et un support (32) d'aiguille de remplissage servant à monter le corps (31) de l'aiguille de remplissage, une manche de refroidissement (33) est agencée entre le corps (31) de l'aiguille de remplissage et le support (32) de l'aiguille de remplissage, et un trou traversant (34) est formé dans la paroi latérale au niveau de l'extrémité inférieure de la manche de refroidissement (33).

7. Procédé d'utilisation d'un dispositif de soufflage-remplissage-scellage destiné à une production continue, dans lequel une extrudeuse (1) extrude un paraison (10), un ensemble de serrage inférieur (6) monte jusqu'à une position entre deux parties d'un moule (5) de corps de bouteille afin de fermer hermétiquement le fond du paraison (10), et agit vers le bas, le paraison (10) est moulé pour en faire un corps de bouteille et une tête de bouteille à l'aide du moule (5) de corps de bouteille et d'un moule (4) de tête de bouteille, et l'ensemble de serrage inférieur (6), le moule (4) de tête de bouteille et le moule (5) de corps de bouteille descendent simultanément, et après l'ouverture du moule (5) de corps de bouteille et avant l'ouverture du moule (4) de tête de bouteille, l'ensemble de serrage inférieur (6) monte vers la position entre deux parties du moule (5) de corps de bouteille afin de serrer et de retenir un corps (20) de bouteille.

8. Le procédé d'utilisation d'un dispositif de soufflage-remplissage-scellage destiné à une production continue selon la revendication 7, **caractérisé en ce qu'**il comprend les étapes suivantes :
S1, extrusion: la conversion, au moyen de l'extrudeuse (1), d'une matière première plastique en un fluide plastique, et l'extrusion, à l'aide de la tête de formation (2) de l'extrudeuse, du fluide plastique afin de former le paraison (10) ;
S2, fermeture hermétique du fond du paraison (10) : l'entraînement, au moyen du premier mécanisme élévateur (8), de l'ensemble de serrage inférieur (6) pour le faire monter vers la position entre deux parties du moule (5) de corps de bouteille, le serrage, au moyen de l'ensemble de serrage inférieur (6), du paraison (10), et l'entraînement, au moyen du premier mécanisme élévateur (8), de l'ensemble de serrage inférieur (6) pour le faire descendre simultanément avec le paraison (10) vers une position initiale ;
S3, formation du corps de la bouteille : la fermeture des deux parties du moule (5) de corps de bouteille et la descente du moule de corps de bouteille simultanément avec le paraison (10) afin de former le corps de la bouteille, la descente de l'aiguille de remplissage (3) vers une position définie pour le remplissage, et la réalisation d'une remise à l'état initial après achèvement du remplissage ;
S4, formation de la tête de la bouteille : la fermeture du moule (4) de tête de bouteille afin de former la tête de la bouteille, l'entraînement, au moyen du premier mécanisme élévateur (8), de l'ensemble de serrage inférieur (6), et l'entraînement, au moyen du second mécanisme élévateur (9), du moule (4) de tête de bouteille et du moule (5) de corps de bouteille, afin de les faire descendre simultanément avec le paraison (10) vers les positions définies ;
S5, serrage du paraison (10) : l'ouverture du moule (5) de corps de bouteille, l'entraînement, au moyen du premier mécanisme élévateur (8), de l'ensemble de serrage inférieur (6) afin de le faire monter vers la position entre deux parties du moule (5) de corps de bouteille, le serrage, au moyen de l'ensemble de serrage inférieur (6), du corps de bouteille formé (20), et l'ouverture du moule (4) de tête de bouteille ;
S6, remise à l'état initial : l'entraînement, au moyen du second mécanisme élévateur (9), du moule (4) de tête de bouteille et du moule (5) de corps de bouteille, afin de les faire monter vers la position initiale, et l'entraînement, au moyen du premier mécanisme élévateur (8), de l'ensemble de serrage inférieur (6) afin de le faire se déplacer vers la position initiale ; et
S7, la réalisation circulaire des étapes S3 à S6 jusqu'à achèvement de la production ou qu'un mauvais fonctionnement mène à un arrêt.

9. Le procédé d'utilisation d'un dispositif de soufflage-remplissage-scellage destiné à une production continue selon la revendication 8, **caractérisé en ce que** la distance maximale entre l'ensemble de serrage inférieur (6) et le moule (5) de corps de bouteille, lorsque l'ensemble de serrage inférieur (6) est situé au-dessous du moule (5) de corps de bouteille, est supérieure à la longueur de la tête de la bouteille ; dans l'étape S3, l'ensemble de serrage inférieur (6) est ouvert pendant que le moule (5) de corps de bouteille forme le corps de la bouteille ; dans l'étape S5, l'ensemble de serrage inférieur (6) monte vers la position initiale ; et dans l'étape S6, une distance de déplacement de l'ensemble de serrage inférieur (6) est égale à zéro.

10. Le procédé d'utilisation d'un dispositif de soufflage-remplissage-scellage destiné à une production continue selon la revendication 8, **caractérisé en ce que**
dans l'étape S4, après la fermeture du moule (4) de tête de bouteille pour former la tête de la bouteille, le mécanisme de serrage supérieur (7) serre le paraison (10), et ensuite le second mécanisme élévateur (9) amène le moule (4) de tête de bouteille, le moule (5) de corps de bouteille et le mécanisme de serrage supérieur (7) à descendre simultanément avec le paraison (10) vers les positions définies ;
dans l'étape S5, après l'ouverture du moule (4) de tête de bouteille, le mécanisme de serrage supérieur (7) est ouvert ; et
dans l'étape S6, le second mécanisme élévateur (9) amène le moule (4) de tête de bouteille, le moule (5) de corps de bouteille et le mécanisme de serrage supérieur (7) à monter vers les positions initiales.
